# EUROPEAN PATENT APPLICATION

(11) **EP 3 272 815 A1**
(43) Date of publication of application: **24.01.2018**
(21) Application number: 17182339.6
(22) Date of filing: 20.07.2017
(51) Int. Cl.: C09B 69/00, C09B 69/04, C09D 11/36, C09B 67/54, C09B 5/14

(54) **METHOD FOR PREPARING A COLORANT FOR USE IN A HOT MELT INK**

(30) Priority: 21.07.2016 EP 16180530
(71) Applicant: OCE Holding B.V., 5914 CA Venlo (NL)
(72) Inventor: WETJENS, Peter M. A., 5914 CA Venlo (NL); VERCOULEN, Gerardus C.P., 5914 CA Venlo (NL); HOFSTRA, Ronald M.J., 5914 CA Venlo (NL); ROUBROEKS, Nick H.M., 5914 CA Venlo (NL)
(74) Representative: OCE IP Department

(57) **Abstract**

The present invention relates to a method for preparing a colorant for use in an ink composition comprising a substantially non-aqueous carrier composition, the method comprising the steps of: providing a chromophore precursor comprising one or multiple functional groups which may be subjected to a chemical reaction to form a salt with a preselected counter ion; providing a salt comprising the preselected counter ion; and providing an organic solvent that is not miscible with water and wherein the reaction product of the chromophore precursor and the salt comprising the preselected counter ion is soluble; preparing a chromophore precursor solution in water by dissolving a quantity of the chromophore precursor in water adding a quantity of the organic solvent while stirring; adding the salt comprising the preselected counter ion while stirring to form a resalted chromophore; separating the resalted chromophore from the reaction mixture; wherein characterized in that the addition of the salt comprising the preselected counter ion is performed until a molar excess of counter ion has been added with respect to the molar amount of functional groups comprised in the chromophore precursor;

The invention further relates to a colorant obtainable with such a method and an ink composition comprising such a colorant.

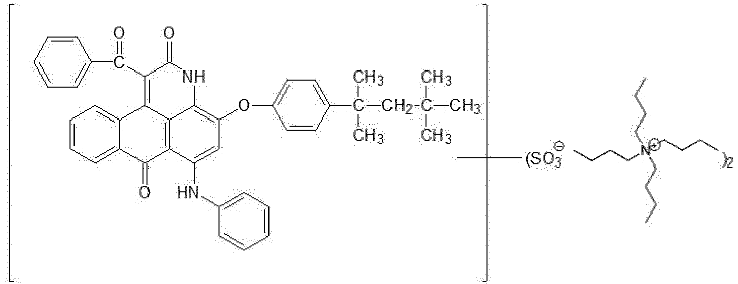

## Description

### FIELD OF THE INVENTION

The present invention relates to a method for preparing a colorant for use in an ink composition, the ink composition comprising a substantially non-aqueous carrier composition and at least one such colorant, in particular a dye. The invention further relates to a colorant obtainable with such a method and an ink composition comprising such a colorant, in particular an ink composition which is solid at room temperature and liquid at a higher temperature, also termed a hot melt ink composition.

### BACKGROUND ART

Hot melt ink compositions are known from the prior art, for example from U.S. Pat. No. 6,936,096. This patent describes a hot melt ink to be applied in ink jet printing devices, the ink comprising a non-aqueous carrier, and at least one dye of the anthrapyridone series, in particularly C.I Solvent Red 149. The dye C.I. Solvent Red 149 has a very fresh magenta color of sufficient strength and clarity.
A disadvantage of this known hot melt ink is that the anthrapyridone dye often migrates on a receiving substrate, in particular during or after laminating the printed receiving substrate with another material (layer), such as e.g. a transparent, flexible layer of polyvinylchloride (PVC). This migration causes a deterioration of the quality of the image printed on the receiving substrate by means of the anthrapyridone dye. More specifically the undesired dye shift will be detrimental to the sharpness of the image transferred to the receiving substrate.

U.S. Pat. No. 7,981,203 discloses an anthrapyridone type colorant having undergone a resalting process in order to obtain a derivative anthrapyridone colorant that at least partly mitigates the above described disadvantage.
Further, a method for preparing a colorant for use in an ink composition as described above and an ink composition comprising a colorant prepared in accordance with such method are disclosed in U.S. Pat. No. 7,981,203. The disclosed method for preparing a colorant for use in an ink composition uses an acid dye as precursor. The acid dye (also termed chromophore) comprises one or multiple functional groups which may be subjected to a chemical reaction to form a salt with a preselected counter ion that provides the dye with migration preventing properties (resalting process). Hence, the chromophore precursor is resalted in the disclosed method in order to form a dye that shows no or less migration on a receiving material. The disclosed method comprises the steps of:
1. calculating the molar quantity of counter ion with regard to the number and nature of functional groups;
2. using a molar ratio of the chromophore precursor with respect to the counter ion of about 1:0,85 (to reduce the risk of fouling of the salt to be prepared by the counter ion);
3. dissolve a quantity of the chromophore precursor in water, wherein the chromophore precursor quantity is about 1/10 times the quantity of water used (based on the mass of the chromophore precursor);
4. drop wise adding a highly-concentrated solution of the counter ion while stirring well;
5. subsequently, drop wise adding a quantity of dichloromethane to the solution while stirring well, wherein the quantity of dichloromethane is more or less similar to the quantity of water used;
6. allow the mixture to separate into different phases by allowing the mixture to rest;
7. removing the aqueous layer of the separated mixture;
8. rinsing the dichloromethane two to three times, each time with more or less a similar amount of water;
9. filtering the dichloromethane and concentrate the dichloromethane by evaporation.

The remaining product is the salt of the chromophore precursor and the preselected counter ion. Preferably an anthrapyridone chromophore precursor is used in the above method.

It is a disadvantage of the above method that it does not result in stable soluble dyes.

It is therefore an object of the present invention to provide a method for preparing a colorant for use in an ink composition comprising a non-aqueous carrier composition; in particular a hot melt ink composition which method provides a colorant that obviates the above-described disadvantages. It is a further object to provide a (thermally) stable colorant that is soluble in a non-aqueous hotmelt ink composition and that does not migrate on a receiving substrate.

### SUMMARY OF THE INVENTION

These objects are at least partly achieved by providing a method according to the present invention, the method enabling the preparation of a colorant that is soluble in a non-aqueous hot melt ink composition and that does not migrate on a receiving substrate. The method according to the present invention provides a dye that is formed by at least one salt of the anthrapyridone series.
It has surprisingly been found that an ink of this kind is more stable than the known ink, as the salt (acting as a derivative dye) of an anthrapyridone, in particular a magenta anthrapyridone, lessens the tendency to migrate on a receiving substrate and the derivative dye shows a good solubility in the hot melt ink matrix, comprising of a non-aqueous carrier composition. This allows the receiving substrate on which the ink composition according to the invention is applied to be subjected to lamination without affecting the image quality.

In a first aspect, the present invention relates to a method for preparing a colorant for use in an ink composition comprising a substantially non-aqueous carrier composition, in particular a hot melt ink composition, the method comprising the steps of:
a. providing a chromophore precursor comprising one or multiple functional groups which may be subjected to a chemical reaction to form a salt with a preselected counter ion; a salt comprising the preselected counter ion; and an organic solvent that is not miscible with water and wherein the reaction product of the chromophore precursor and the salt comprising the preselected counter ion is soluble;
b. preparing a chromophore precursor solution in water by dissolving a quantity of the chromophore precursor in water, preferably in an amount of between 5 wt% and 25 wt%, more preferably in an amount of between 7 wt% and 15 wt%, relative to the total weight of the chromophore solution;
c. adding a quantity of the organic solvent while stirring;
d. adding the salt comprising the preselected counter ion while stirring to form a resalted chromophore;
e. optionally filtering the mixture obtained in step d;
f. separating the resalted chromophore from the mixture obtained in step d or optionally in step e;
characterized in that step d is performed until a molar excess of counter ion has been added with respect to the molar amount of functional groups comprised in the chromophore precursor.

A molar excess of the counter ion is used in order to force the reaction between the chromophore precursor and the salt comprising the preselected counter ion to completion.

The product obtained according to the above method is a resalted chromophore that is stable and suitable to be used in an ink composition comprising a substantially non-aqueous carrier composition, such as a hot melt composition. The resalted chromophore shows improved solubility in the non-aqueous carrier composition of a hotmelt ink composition and shows improved migration behavior (i.e. reduced migration) on the recording substrate.

In an embodiment, the molar excess of counter ion is expressed as the ratio of the molar amount of counter ion and the molar amount of functional groups comprised in the chromophore precursor which ratio ranges from 1.01:1 to 2.5:1, preferably from 1.02:1 to 1.5:1 and more preferably from 1.05:1 to 1.25:1.

The molar quantity of counter ion is calculated with regard to the number and nature of functional groups present in the chromophore (molar equivalents) and the desired molar excess indicated here above.

In an embodiment, the separating step f comprises the sub-steps:
f1. allowing the mixture obtained in step d or optionally in step e to separate into an aqueous phase and an organic phase by allowing the mixture to rest;
f2. removing the aqueous phase;
f3. optionally rinsing the organic phase multiple times, each time with more or less a similar amount of water;
f4. optionally filtering the organic phase; and
f5. concentrating the organic phase by evaporation of the organic solvent.

In an embodiment, multiple rinsing steps in step f3 are performed with decreasing amounts (mass) of water in each subsequent step.

In an embodiment, the initial rinsing step is performed with an amount (mass) of water that is larger than the amount (mass) of the organic phase, preferably in a mass ratio water:organic phase of between 1.1:1 and 2.5:1, more preferably between 1.2:1 and 2:1 and even more preferably between 1.3:1 and 1.7:1.

With such rinsing schemes, the number of required rinsing steps can be significantly reduced.

In an embodiment, the chromophore precursor comprises a colorant from the anthrapyridone series, preferably a magenta anthrapyridone.

In an embodiment, the salt comprises a counter ion selected from the group consisting of phosphonium groups and ammonium groups and is preferably a chloride salt.

In an embodiment, the organic solvent is selected from the group consisting of: isoamylalcohol, methylene chloride (MC) (dichloromethane), methyl isobutyl ketone (MIBK) and 1-pentanol. The preferred solvent is determined by the solubility of the resalted chromophore formed in step d. When tetrabutylammonium is used as a counter ion, Isoamylalcohol is preferred.

In an embodiment, the ratio of the amount (by mass) of organic solvent added to the mixture in step c and the total amount (by mass) of water present in the mixture ranges from 0.3:1 to 2.0:1, preferably from 0.5:1 to 1.5:1, more preferably from 0.6:1 to 0.9:1, in particular 0.7:1.
The amount of solvent used may influence the rinsing efficiency. Furthermore, the amount of solvent must be high enough to be able to solve all the formed (resalted) chromophore and the amount of solvent must be not too high, because the solvent needs to be evaporated in the final process step.

In an embodiment, the mass ratio chromophore precursor: water in step c is between 1:20 and 1:5, preferably between 1:15 and 1:8, more preferably between 1:12 and 1:9, and typically about 1:10.

In a second aspect, the present invention relates to a colorant obtainable via the method according to the first aspect of the present invention.

In an embodiment, the colorant comprises a salt of the anthrapyridone series, in particular a salt of a magenta anthrapyridone.

In an embodiment, the salt comprises a counter ion selected from the group consisting of phosphonium groups and ammonium groups, in particular tetra butyl phosphonium or tetra butyl ammonium.

A salt of the anthrapyridone is considered as a chemical modification of an anthrapyridone dye known from the Color Index (C.I.), i.e. a resalted derivative. For example, the salt a known anthrapyridone dye comprises an anion and a suitable cation bonded to the anion to counteract dye migration. In this context it is mentioned that with a substantially non-aqueous carrier is meant a carrier which is not substantially based on water (acting as vehicle). The non-aqueous carrier preferably comprises less than 15 mass percent of water, more preferably less than 10 mass percent of water, even more preferably less than 5 mass percent of water, and most preferably less than 2 mass trimethyl ammonium, dialkyl/ diaryl substituted dimethyl ammonium, benzyl alkyl dimethyl ammonium, aryl trialkyl ammonium and tetraalkyl substituted ammonium. Examples of salts of the abovementioned cations are: tripentylamine, N-methyl-N,N-dioctyl-1-octanaminium chloride, Primene™ 81-R (a primary aliphatic amine available at Rohm and Haas, USA), 1,3 di-o-tolylguanidine, phenyltrimethylammonium bromide, benzyltrimethylammonium bromide, octyltrimethylammonium bromide, decyltrimethylammonium bromide, dodecyltrimethylammonium bromide, tetradecyltrimethylammonium bromide, hexadecyltrimethylammonium bromide (CTAB), trimethylstearylammonium chloride, dimethyldioctylammonium bromide, dodecylethyldimethylammonium bromide, dodecylethyldimethylammonium bromide, ethyl(1-hexadecyl)dimethylammonium bromide, didecyldimethylammonium bromide, didodecyl dimethyl ammonium bromide, dimethyldistearylammonium chloride, benzalkonium chloride, benzyl dodecyl dimethyl ammonium chloride, benzyl tetradecyl dimethyl ammonium chloride, benzyl cetyl dimethyl ammonium chloride, benzyl stearyl dimethyl ammonium chloride, benzyl phenyl dimethyl ammonium chloride, methyl tributylammonium hydroxide, benzyl triethyl ammonium bromide, benzyl tributylammonium bromide, tetrabutylammonium bromide (TBNBr), tetrabutylammonium chloride (TBNCI) tetrapentylammonium bromide.

In an embodiment the cation can be derived from the group consisting of alkyl/ aryl substituted triphenyl phosphonium, alkyl substituted tributyl phosphonium or tetraalkyl/ aryl substituted phosphonium. Examples of salts of phosphonium-cations are: methyl triphenyl bromide (MTPBr), methyl triphenyl chloride (MTPCI), ethyltriphenylphosphonium , propyl triphenyl bromide, hexyl triphenyl bromide, octyl triphenyl bromide, decyl triphenyl bromide, benzyl triphenyl bromide, hexadecyl tributyl bromide, butyltriphenylphosphonium chloride, bromide, tributyloctylphosphonium bromide.

Of the above, the ammonium salts are preferred, because these show superior solubility in non-aqueous ink carrier compositions. In particular tetrabutylammonium bromide and tetrabutylammonium chloride are preferred.

It is known that bromide may result in corrosion of gold, which may be used as a top layer of nozzle plates. Therefore, the resalted chromophore manufactured with a method according to the present invention needs to be substantially free of bromide. Therefore, chloride salts are preferred. An additional advantage of using chloride salts instead of bromide salts is that due to the lower solubility of the chloride salts in the organic phase (containing the resalted chromophore) obtained in a method according to the present invention, so-called fouling of organic phase (and hence the resalted chromophore) occurs to a much lesser extent when chloride salts are used instead of bromide salts (at least for bromide and chloride salts comprising the same cation, e.g. tetrabutylammonium bromide (TBNBr), tetrabutylammonium chloride (TBNCI)). Therefore less rinsing steps are required to remove chloride (salt) residues from the organic phase in order to purify the resalted chromophore, leading to an improved production process efficiency.

It has further been found that it is advantageous to force a chemical reaction between an anthrapyridone and a cationic tetrabutylphosphonium bromide/chloride or tetraybutylammonium bromide/chloride available from Aldrich. This reaction will commonly have a relatively high yield. Moreover, this reaction can be initiated relatively easily. During the reaction between the anthrapyridone molecule and a plurality of tetrabutylphosphonium bromide/chloride or tetrabutylammonium bromide/chloride molecules, a plurality of ions (depending on the type of anthrapyridone used, for example a Na⁺ ion or a H⁺ ion) will be removed from the anthrapyridone molecule, and a bromide ion (Br⁻) or chloride ion (Cl⁻) will be removed from each tetrabutylphosphonium bromide/chloride or tetraybutylammonium bromide/chloride molecule. The salt thus obtained comprises anionic anthrapyridone and cationic tetrabutylphosphonium (TBP) or tetraybutylammonium (TBN).

To facilitate the formation of the salt, the anthrapyridone (used as starting material to form the salt) preferably comprises at least one sulphonic acid group and/or a derivate thereof (as functional group(s)). Sulphonic acid groups and derivates thereof are commonly relatively reactive which facilitates the chemical modification of the anthrapyridone considerably. Moreover, the application of one or more sulphonic groups and derivates thereof will commonly lead to a relatively thermo stable dye.

An anthrapyridone to prepare the colored salt for an ink composition according to the invention can be represented by formula (1): 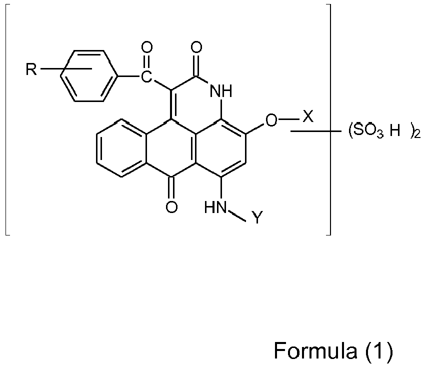 wherein X stands for a member selected from the group consisting of phenyl, alkylphenyl and cycloalkylphenyl groups, Y stands for a member selected from the group consisting of phenyl, alkylphenyl, phenoxyphenyl, chlorophenyl, bromophenyl, diphenyl and tetrahydronaphtyl radicals, and R is a member selected from the group consisting of hydrogen, methyl, chloride, bromide, methoxy or nitro. An advantage of the use of such an anthrapyridone molecule to prepare the colored salt is the salt to be obtained will commonly have a relatively good and durable color-resistance.

In an embodiment, the colorant according to the present invention or obtained in accordance with a method according to the present invention comprises a salt represented by formula (2): 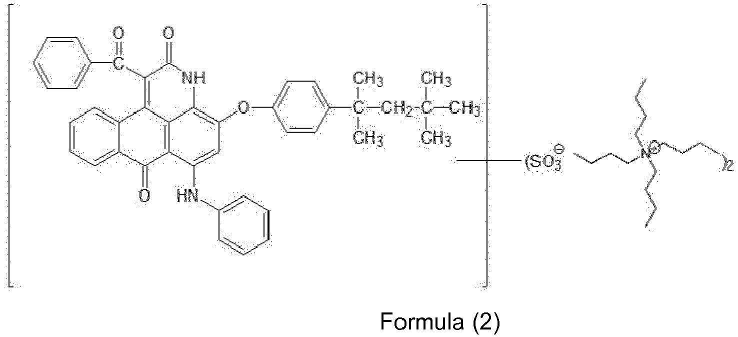 Formula (2) shows tetrabutylammonium (TBN) as a counter ion. In case of tetrabutylphosphonium, the nitrogen atom (N) is substituted by a phosphorus atom (P).

The salt represented above comprises an anionic magenta anthrapyridone, in particular C.I. Acid Red 143:1, and cationic TBP or TBN. C.I. Acid Red 143:1 is available from Nippon Kayaku, Tokyo, Japan. This product is considered as being relatively pure, wherein practically every molecule comprises two sulphonic acid groups. In an acceptable alternative embodiment the dye comprises a salt represented by formula (3): 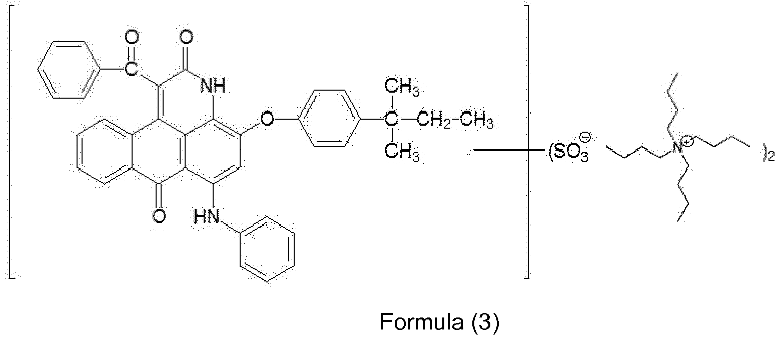 Formula (3) shows tetrabutylammonium (TBN) as a counter ion. In case of tetrabutylphosphonium, the nitrogen atom (N) is substituted by a phosphorus atom (P).

The salt represented above comprises an anionic magenta anthrapyridone, in particular C.I. Acid Red 143, and cationic TBP or TBN. C.I. Acid Red 143 is available from Archroma Management LLC, Switzerland. Although this product is considered as being less pure than C.I Acid Red 143:1, still a satisfying and relatively stable salt can be obtained with this compound. A common advantage of the application of C.I. Acid Red 143:1 and C.I. Acid Red 143 is that these compounds hardly influence the viscosity of the ink composition according to the invention in a noticeable manner.

In a third aspect, the present invention relates to an ink composition, comprising a colorant according to the second aspect of the present invention or as obtainable via the method according to the first aspect of the present invention.

In an embodiment, the ink composition is a hot melt ink composition, which is solid at room temperature and liquid at a higher temperature and comprising a substantially non aqueous carrier composition.

In an embodiment, the carrier composition comprises an amorphous binder and a crystalline component.

The invention will be explained in detail with reference to the following Figures and non-limitative examples

### BRIEF DESCRIPTION OF THE FIGURES

Fig. 1. Results preparation of colorants in accordance with Comparative Example A (left) and Example 1 (right), comprising methyltriphenylphosphonium as counter ion.
Fig. 2. Results preparation of colorants in accordance with Comparative Example B (left) and Example 2 (right), comprising tetrabutylammnonium as counter ion.
Fig. 3. Results preparation of colorants in accordance with Comparative Example C (left) and Example 3 (right), comprising tetrabutylphosphonium as counter ion.
Fig. 4 Results preparation of colorants with a range of molar ratios between the counterion (tetrabutylammnonium) and the functional (reactive) groups in the anthrapyridone chromophore (Acid Red 143) precursor.
Fig. 5 Results of migration tests of magenta colorants (prepared) according to the present invention in comparison with a reference magenta colorant.
Fig. 6 Results of solubility tests of A) AR143/MTP; B) AR143/TBP; and C) AR143/TBN

### DETAILED DESCRIPTION

### Materials

The chromophores, in particular Acid Red 143 are obtained from Archroma Management LLC.

Cyclohexane and toluene are obtained from Merck.

All other components are obtained from Sigma Aldrich (unless stated otherwise).

### Methods

### Migration test

A chromatography test is performed to provide an (comparative) indication of migration of a colorant on a print substrate. For this, solutions of the colorants to be tested, in dichloromethane are prepared. The prepared solutions contain substantially equal concentrations of colorant. For the purpose of the present invention, the eluent solution consists of a cyclohexane/toluene mixture (50wt%/50wt%). A sheet of Wattmann 1-CHR paper is used as a substrate. At about 1 cm from the bottom edge of the paper sheet dots of equal size of the colorant solutions are made (by using a pipette). Each dot is positioned at substantially the same distance from the bottom edge of the paper sheet. Then the sheet is left to dry. A beaker is filled with eluent solution such that the level of eluent solution is less than 1 cm. The dried test sample (paper sheet provided with colorant dots) is placed in the beaker such that the lower edge of the paper sheet touches the bottom of the beaker. Due to capillary flow the eluent solution will flow upward in the paper sheet. This set up is left to stand until the wetted height of paper sheet is at least 1.5 times the height to which the most soluble colorant rises. The results are judged qualitatively. If the colorant dot remains at the starting position, migration is not likely to occur. If the colorant is transported with the eluent solution and forms a streak, that particular colorant is likely to migrate on the substrate.

### Solubility test

5 phr (parts per hundred resin (mass)) is added to 50 grams of carrier composition (composition see Examples) at a temperature of 130°C. The carrier composition is filtered beforehand over a 200 nm nylon filter (Pall Ultipor N66). After 4 hours of stirring under nitrogen environment the ink is directly filtered (at a filter pressure p of 1 bar) over a 450 nm glass filter (Pall Ultipor GF) with a circular filtration area with a diameter d of 5 mm. Images of the filters are used to qualitatively judge the solubility of the tested colorant, in particular with reference to one another. In general, the smaller the residue present on the filter (when tested under similar conditions), the better the solubility of the tested colorant in the used carrier composition is. Light microscopy can be used to judge if the residue on the filter is dye related.

### Examples

### COMPARATIVE EXAMPLES (CEx) A-C and EXAMPLES (Ex) 1-3: preparation of colorants according to the prior art and according to the present invention

As starting material 5 grams of a 10.5 w% solution of anthrapyridone chromophore (acid dye), Acid Red 143 (AR143), obtained from Achroma was used [solution with pH of ∼7]. This chromophore precursor comprises one or multiple (in this example: two) functional groups which are subjected to a chemical reaction to form a salt. Molar quantities counter ion with regard to the number and nature of functional groups were calculated. Molar ratios of the chromophore with respect to the counter ion of 1:0.85 (Comparative Examples A-C) and 1:1.1 (Examples 1-3) were applied, see Table 1. The ratio 1:0.85 is also used in the prior art. The counter ions methyltriphenylphosphonium, tetrabutylammonium and tetrabutylphosphonium were used to resalt the acid dye. 3.6 grams of isoamyl alcohol (ratio between isoamylalcohol and Acid Red solution 0.72:1) was added after which was stirred for 30 minutes. While stirring the calculated amount of counter ion was added.

**Table 1: amount of salts used in comparative examples A-C and examples 1-3**

| **Counter ion salt** | **Ratio 1:0.85 [g]** | | **Ratio 1:1.1 [g]** | |
|---|---|---|---|---|
| Methyltriphenylphosphonium-bromide | CEx A | 0.366 | Ex 1 | 0.473 |
| Tetrabutylammnonium-bromide | CEx B | 0.330 | Ex 2 | 0.427 |
| Tetrabutylphosphonium-bromide | CEx C | 0.347 | Ex 3 | 0.450 |

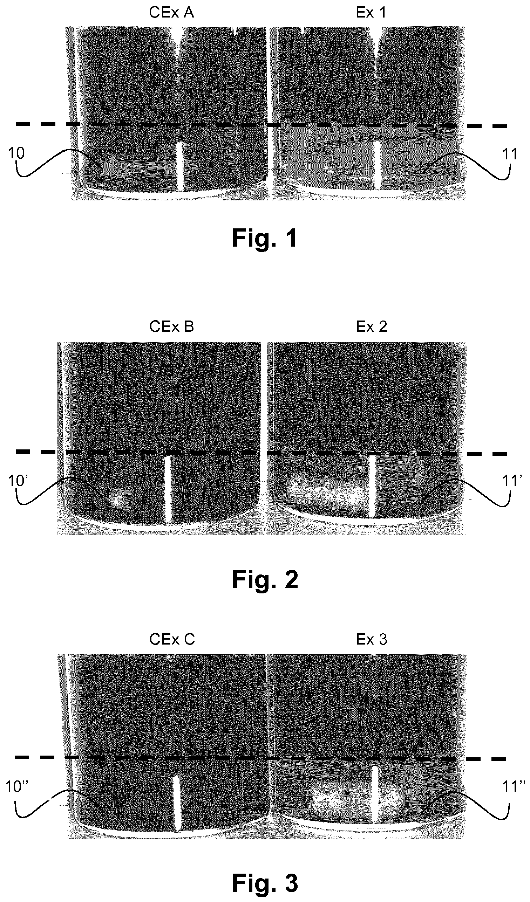

The mixture was stirred for two hours and which after the mixture was allowed to separate into different phases by allowing the mixture to rest for at least two hours. The results are shown in Figures 1 (CEx A and Ex 1), 2 (CEx B and Ex 2) and 3 (CEx C and Ex 3). In the pictures the lower layer is the aqueous layer (indicated with 10, 10', 10" and 11, 11', 11" respectively), due to the solubility of the solvent (isomyl alcohol) in this aqueous layer, the aqueous layer will always be slightly coloured, because the colorant is soluble in the isomyl alcohol to some extent).
From these Figures it can be clearly seen that using a molar deficit amount of salt containing the counterions compared to the number of functional (reactive) groups in the chromophore (i.e. CEx A-C), the aqueous phase contains a larger concentration (darker colour) of colorant than when an excess amount of salt is used (i.e. Ex 1-3).
It can therefore be concluded that the reaction to form a salt of the chromophore precursor and the counterion is incomplete and results in colorant that is still (partly) soluble in the aqueous phase. Consequently the incompletely converted chromophore precursor will not be soluble in a non-aqueous hot melt ink composition.
In accordance with the present invention, a molar excess of the counter ion is used with reference to the molar amount of functional groups comprised in the chromophore precursor in order to bring the reaction to completion (Ex. 1-3).

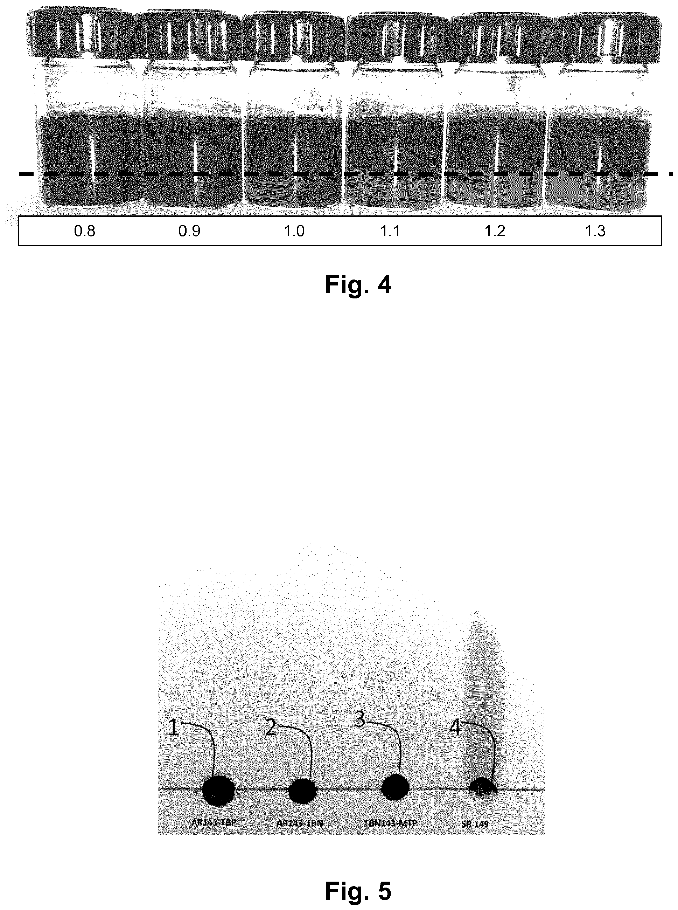

In Figure 4 the results of preparations of colorants with a range of molar ratios between the counterion (tetrabutylammnonium) and the functional (reactive) groups in the anthrapyridone chromophore (Acid Red 143) precursor is shown. The used relative molar amount of counterion with respect to the molar amount of functional (reactive) groups present in the chromophore precursor is denoted below the respective bottle. From this Figure it can be derived that at an excess ratio 1.1:1 (fourth bottle from the left) indeed decreases the solubility in the aqueous phase.

### EXAMPLE 4: preparation of a colorant using a method according to the first aspect of the present invention.

As starting material 1400 grams of a 10.5 w% solution of anthrapyridone chromophore (acid dye), Acid Red 143 (AR143), obtained from Achroma was used [solution with pH of ∼7]. This chromophore precursor comprises one or multiple (in this example: two) functional groups which are subjected to a chemical reaction to form a salt. The required molar quantity counter ion with regard to the number and nature of functional groups was calculated. A molar ratio of the chromophore with respect to the counter ion of 1:1.1 was applied. 1008 grams of isoamylalcohol (ratio between isoamylalcohol and Acid Red solution 0.72:1) was added after which was stirred for 30 minutes. While stirring 122 grams of the counter ion tetrabutylammonium-bromide (TBN-Br) was added. The mixture was stirred for two hours which after the mixture was filtered first over a 1 µm filter (Pall, SealKleen IJF-X9860). The mixture was allowed to separate into different phases by allowing the mixture to rest for at least two hours. The aqueous phase was separated from the mixture by using a separatory funnel. The organic (isoamylalcohol) phase (containing the resalted chromophore) was rinsed with water for several times until the organic phase was within specification (i.e. containing 2 ppm or less bromide). Several rinsing schemes were used as shown in the table below.

| rinsing scheme | organic phase : rinsing water | number of rinsing steps till bromide < 2 ppm |
|---|---|---|
| A | 1 rinse 1:1 and 9 rinses 1:0.5 | 9 |
| B | 2 rinses 1:1.5 and 5 rinses 1:0.5 | 7 |
| C | 2 rinses 1:1.5 and 4 rinses 1:1 | 6 |

For example scheme B is performed as follows: the first two times the amount of water that was used to rinsing the isoamylalcohol phase was 1750 grams (ratio between rinsing water and Acid Red solvent solution (i.e. the organic phase) 1.5:1). This was followed by five times the amount of water that was used to rinsing further the isoamylalcohol phase was 583.3 grams (ratio between rinsing water and Acid Red solution 0.5:1). It is concluded that by starting the rinsing sequence with rinsing steps with an amount (mass) that is larger than the amount (mass) of the organic phase, less rinsing steps are required, while using the same total amount of water (compare schemes A and B: in both cases the total amount (mass) of water used is 5.5 times the amount (mass) of the organic phase, while in scheme B 7 rinsing steps are required, while in scheme A 9 rinsing steps are required). If the amount of water used in the subsequent steps is further increased (compare schemes B and C), the rinsing efficiency can be further improved.

After rinsing the isoamylalcohol phase was concentrated by evaporation. The remaining product is the salt of the chromophore (AR143 in the present example) and the counter ion. For the present example MTP, TBP and TBN respectively.

### EXAMPLE 5 preparation of an ink carrier composition

A carrier composition containing 70% by weight of the bis-ester formed from the reaction of hexanediol and 2 mol-equivalents of p-methoxy benzoic acid. This compound is known as 1,6-bis(methoxybenzoyloxy)hexane (1,6-4A) and is disclosed in US 6,682,587 (Table 3, compound 8). In addition, the carrier composition contains 30% by weight of an amorphous component which is a mixture of different compounds. This amorphous component can be obtained by reacting di-isopropanolamine, benzoic acid and succinic acid anhydride as explained in example 3 of US 6,936,096. These components are melt mixed as to form a carrier composition.

Inks that can be formed with the carrier composition according to Example 5 and a colorant according to Example 4 appear to have a sparkling magenta color that will hardly show any visible migration of the coloring material when transferred to a plain paper receiving material. Even in case the receiving material is subsequently laminated with another layer, e.g. a transparent foil, the transferred image will substantially retain its sharpness and image quality.

### EXAMPLE 6 Migration test

The colorants prepared in Example 4 and a reference colorant (Solvent Red 149, SR149) were subjected to the migration test as described above. The results are shown in Figure 5. The following colorants are shown: AR143/TBP (1); AR143/TBN (2); AR143/MTP (3) and a reference colorant SR149 (4). It can be concluded that in view of the reference colorant, the resalted colorants prepared in Example 4 show no migration, while the reference colorant shows significant migration.

### EXAMPLE 7 Solubility test

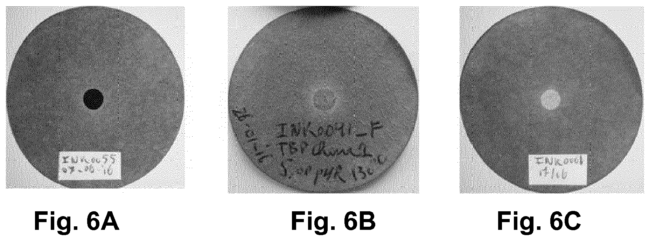

The colorants prepared in Example 4 and the carrier composition prepared in Example 5 are used to perform the above described solubility test. The results are shown in Figure 6. The darkness of the spot in the middle of the filter is an indication for the amount of residue present on the filter. In Figure 6 it can be clearly seen that the filter used for AR143/MTP (Fig. 6A) shows the darkest spot, followed by the filter used for AR143/TBP (Fig. 6B) which has a spot that has a similar color than the surroundings and finally the lightest spot is observed on the filter used for AR143/TBN (Fig. 6C). Therefore, it is shown that AR143/TBP and AR143/TBN have improved solubility in the carrier composition compared to AR143/MTP, and AR143/TBN shows the highest solubility in the used carrier composition.

Without wanting to be bound to any theory it is believed that solubility of the colorants in the carrier composition may be improved by using a counter ion having a branched structure in order to provide significant steric hindrance, which may prevent crystallization of the colorant in the carrier composition. In view of solubility in the in carrier composition, the counter ion must have sufficient affinity with the components in the ink carrier composition. Inventors have found that branched counter ions indeed show improved solubility with reference to standard C.I. Solvent Red 149 colorant. Furthermore, inventors have found that the tetra butyl substituted counter ions show superior solubility in the carrier composition of the ink compared to counter ion methyltriphenyl phosphonium. Of these the ammonium variant (i.e. tetrabutylammonium, TBN) shows the best solubility.
It is further believed that due to the high(er) electronegativity resulting in a stronger bond between the chromophore and the ammonium counter ion, such colorants shows less sensitivity towards formation of alkali and earth alkali salts of the chromophore deposits that may cause print head defects. Printer engine tests prove this hypothesis.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination and any combination of such claims are herewith disclosed. Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language).

## Claims

1. Method for preparing a colorant for use in an ink composition comprising a substantially non-aqueous carrier composition, the method comprising the steps of:
a. providing a chromophore precursor comprising one or multiple functional groups which may be subjected to a chemical reaction to form a salt with a preselected counter ion; a salt comprising the preselected counter ion; and an organic solvent that is not miscible with water and wherein the reaction product of the chromophore precursor and the salt comprising the preselected counter ion is soluble;
b. preparing a chromophore precursor solution in water by dissolving a quantity of the chromophore precursor in water;
c. adding a quantity of the organic solvent while stirring;
d. adding the salt comprising the preselected counter ion while stirring to form a resalted chromophore;
e. optionally filtering the mixture obtained in step d;
f. separating the resalted chromophore from the mixture obtained in step d or optionally in step e;
**characterized in that** step d is performed until a molar excess of counter ion has been added with respect to the molar amount of functional groups comprised in the chromophore precursor;

2. Method according to claim 1, wherein the molar excess of counter ion is expressed as the ratio of the molar amount of counter ion and the molar amount of functional groups comprised in the chromophore precursor which ratio ranges from 1.01:1 to 2.5:1.

3. Method according to any one of the preceding claims, wherein the separating step e comprises the sub-steps:
f1. allowing the mixture obtained in step d or optionally in step e to separate into an aqueous phase and an organic phase by allowing the mixture to rest;
f2. removing the aqueous phase;
f3. optionally rinsing the organic phase multiple times, each time with more or less a similar amount of water;
f4. optionally filtering the organic phase; and
f5. concentrating the organic phase by evaporation of the organic solvent.

4. The method according to claim 3, wherein step f3 comprises multiple rinsing steps which are performed with decreasing amounts (mass) of water in each subsequent step.

5. The method according to any one of claims 3-4, wherein the initial rinsing step is performed with an amount (mass) of water that is larger than the amount (mass) of the organic phase, preferably in a mass ratio water:organic phase of between 1.1:1 and 2.5:1.

6. The method according to any one of the preceding claims, wherein the chromophore precursor comprises a colorant from the anthrapyridone series.

7. The method according to claim 6, wherein the chromophore precursor comprises at least one sulphonic acid group and/or a derivate thereof as functional group(s).

8. The method according to any one of the preceding claims, wherein the salt comprises a counter ion selected from the group consisting of phosphonium groups and ammonium groups.

9. The method according to any one of the preceding claims, wherein the salt is a chloride salt.

10. A colorant obtainable by a method according to any one of claims 1-9.

11. The colorant according to claim 10, wherein the counter ion is tetra butyl phosphonium or tetra butyl ammonium.

12. An ink composition comprising a colorant according to any one of claims 10-11 or as obtained by a method according to any one of claims 1-9.

13. The ink composition according to claim 12, wherein the ink composition is a hot melt ink composition, which is solid at room temperature and liquid at a higher temperature and comprising a substantially non aqueous carrier composition.

14. The ink composition according to claim 13, wherein the non aqueous carrier composition comprises an amorphous binder and a crystalline component.
